# EUROPÄISCHE PATENTANMELDUNG

(11) **EP 2 159 354 A1**
(43) Veröffentlichungstag der Anmeldung: **03.03.2010**
(21) Anmeldenummer: 09010579.2
(22) Anmeldetag: 18.08.2009
(51) Int. Cl.: E04H 17/22, F16B 15/02, F16B 43/02

(54) **Vorrichtung zur Befestigung von Pfosten für Schutzwände**

(30) Priorität: 27.08.2008 DE 102008039965
(71) Anmelder: Ed. Züblin Aktiengesellschaft, 70567 Stuttgart (DE)
(72) Erfinder: Kugler, Andreas, 74321 Bietigheim-Bissingen (DE)
(74) Vertreter: Riedel, Peter

(57) **Zusammenfassung**

Vorrichtung zur Befestigung von Pfosten (7) für Schutzwände auf Bauwerken (1) oder Fundamenten, welche ein Einbauelement (4) beinhaltet, welches von dem Bauwerk oder dem Fundament aufgenommen wird. Das Einbauelement (4) beinhaltet mindestens einen Gewindeabschnitt (16,23), an welchem die Fußplatte (8) des Pfostens (7) mittels Muttern befestigt wird. Zur zentrischen Lasteinleitung in das Einbauelement (4) ist zwischen der Fußplatte (8) und der Mutter eine Ausgleichsvorrichtung (25) vorgesehen, die eine Kegelpfanne (28) und eine Kugelscheibe (29) umfasst.

## Beschreibung

Die Erfindung betrifft eine Anordnung zur Befestigung von Pfosten für Schutzwände auf Bauwerken oder Fundamenten der im Oberbegriff des Anspruchs 1 angegebenen Gattung.

Beim Bau von Schutzwänden beispielsweise Lärmschutzwänden, Windschutzwänden, Blendschutzwänden, Schallschutzwänden oder dgl. werden auf Bauwerken oder Fundamenten in der Regel Einbauelemente einbetoniert oder nach Betonage der Bauwerke bzw. Fundamente Gewindestäbe durchgeankert oder auch eingeklebt. Die Schutzwände sind je nach Umgebungsbedingungen teilweise hohen Belastungen ausgesetzt, wobei nicht nur Wind und Sturm erhebliche Kräfte auf die Wandelemente und die Pfosten, an denen diese aufgenommen sind, ausüben. Durch vorbeifahrende Züge oder Kraftfahrzeuge, insbesondere des Personen- und Güterverkehrs werden hohe dynamische Lasten in Form von Druck- und Sogwirkung über die Wand in die Einbauelemente und somit in die Bauwerke bzw. Fundamente eingeleitet. So haben z.B. Untersuchungen an Hochgeschwindigkeitsstrecken der Deutschen Bahn gezeigt, dass sich eine Schiefstellung der Einbauelemente auf die Dauerhaftigkeit der Verbindung in erheblichem Maße negativ auswirkt. Da die Einbringung der Einbauelemente ein handwerklicher Vorgang ist und daher hinsichtlich der Genauigkeiten den Bedingungen der Baustelle unterworfen ist, kann eine ausreichende Reduzierung der Schiefstellung der Einbauelemente bei der Montage nicht ausreichend sichergestellt werden.

Der vorliegenden Erfindung liegt die Aufgabe zugrunde, eine Anordnung zur Befestigung von Pfosten der eingangs genannten Gattung zu schaffen, durch welche die negativen Einflüsse der Schiefstellung von Einbauelementen auf die Dauerhaftigkeit ausgeschlossen oder zumindest reduziert werden.

Diese Aufgabe wird durch eine Anordnung zur Befestigung von Pfosten für Schutzwände mit den Merkmalen des Anspruchs 1 gelöst.

Der negative Einfluss der Schiefstellung der Einbauelemente auf die Dauerhaftigkeit der Befestigung ist insbesondere auf die Tatsache zurückzuführen, dass durch die schief gestellten Gewindebolzen eine exzentrische Lasteinleitung entsteht, welche als Biegebeanspruchung auf die Gewindebolzen wirkt und damit eine zusätzliche Belastung darstellt. Die Ausgleichsvorrichtung, die erfindungsgemäß eine Kegelpfanne und eine Kugelscheibe umfasst, ermöglicht es, Schiefstellungen der Gewindebolzen an den Einbauelementen auszugleichen und damit die Last zentrisch, d. h. in Richtung der Längsachse des Gewindebolzens einzuleiten. In der Regel können Winkelabweichungen bis zu 3° ausgeglichen werden.

Zur Ausrichtung der Fußplatte dahingehend, dass der Pfosten in der Vertikalen ausgerichtet ist, wird vorgeschlagen, dass zwischen der Fußplatte und dem Betonkörper ein Abstandselement angeordnet ist, das sich vorzugsweise in einem Flächenschwerpunkt der Fußplatte befindet. Der Raum zwischen Fußplatte und Betonkörper um dieses Abstandselement herum wird mit einer Schicht aus einem schwindarmen Mörtel oder einer anderen geeigneten Vergussmasse gefüllt.

Bei Bauwerken wie z.B. Brücken ist an dem Bauwerk ein Längsrand gegeben, an dem ein vorzugsweise aus Beton bestehendes Randelement vorgesehen ist, in dem das Einbauelement gehalten ist. Ein solches Randelement kann auf einfache Weise ausgetauscht werden, so dass im Falle einer notwendigen Reparatur der Aufwand für den Ersatz des Einbauelementes reduziert ist. Zweckmäßigerweise umfasst das Randelement einen den Längsrand des Bauwerks übergreifenden Längskörper, in dem das Einbauelement eingegossen, durchgeankert oder eingeklebt ist.

Gemäß einer Ausgestaltung der Erfindung ist das Fundament ein Betonkörper als Sockel für den Pfeiler, wobei in dem Betonkörper das Einbauelement eingegossen oder verklebt ist. Gemäß einer Ausgestaltung der Erfindung umfasst das Einbauelement vier Anker, die mittels Verbindungsstäben zu einer Baueinheit zusammengesetzt sind. Dadurch braucht vor dem Gießen des Betons lediglich ein Einbauelement positioniert zu werden, an dem alle für die Befestigung des Pfostens erforderlichen Gewindeabschnitte ausgebildet sind. Alternativ dazu ist es auch möglich, dass mehrere Einbauelemente, die lediglich jeweils einzelne Anker umfassen, vorgesehen sind. Eine solche Anordnung ist dann zu bevorzugen, wenn die Einbauelemente durch Verkleben im Betonkörper befestigt werden sollen.

Um die Einbauelemente besonders gut mit dem Beton zu verbinden, ist es vorteilhaft, dass die Anker einen Abschnitt aus einem Rippenstahl aufweisen. Der Gewindeabschnitt zum Aufschrauben der Befestigungsmutter ist in der Regel an dem Anker angeformt und somit einstückig mit diesem ausgeführt. Alternativ dazu ist es jedoch auch möglich, dass der Gewindeabschnitt durch einen Gewindebolzen gebildet ist, der in eine Gewindebohrung eines am Anker ausgebildeten Hülsenabschnitts eingesetzt ist.

Ein Ausführungsbeispiel der Erfindung ist nachstehend anhand der Zeichnung näher erläutert. In der Zeichnung zeigt:
- Fig. 1: eine schematische Darstellung eines Bauwerks für einen Gleiskörper mit einer Vorrichtung zur Aufnahme einer Schutzwand,
- Fig. 2: ein aus mehreren Ankern bestehendes Einbauteil, zur Befestigung von Pfosten der Schutzwand,
- Fig. 3: einen Schnitt durch eine im Beton gehaltene Vorrichtung mit daran befestigtem Pfosten der Schutzwand,
- Fig. 4: ein als einzelner Anker ausgeführtes Einbauelement in vergrößerter Darstellung,
- Fig. 5a: eine Schnittdarstellung einer Kugelscheibe mit einer Kegelpfanne in Normalposition,
- Fig. 5b: eine Schnittdarstellung einer Kegelpfanne und einer ausgerichteten Kugelscheibe mit Gewindeabschnitt und Mutter,
- Fig. 6: eine Ausführungsvariante einer im Beton gehaltenen Vorrichtung zur Aufnahme der Schutzwand in vergrößerter Darstellung,
- Fig. 7: einen Längsschnitt durch den oberen Teil eines Bolzens mit Fußplatte und Befestigungsmitteln.

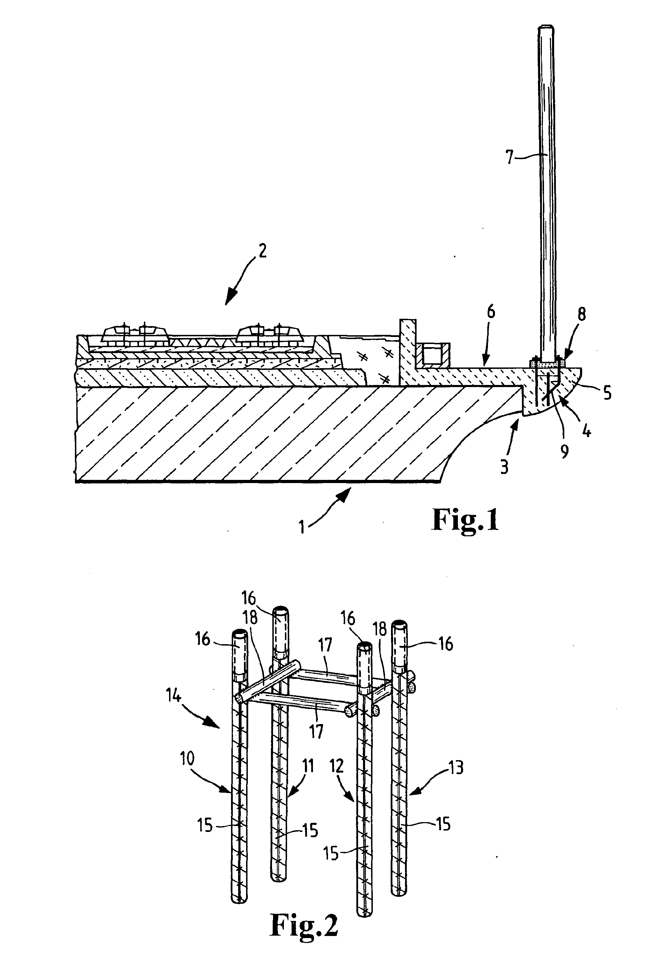

In Fig. 1 ist ein Ausschnitt eines Betonbauwerks 1 beispielsweise einer Brücke dargestellt, auf der ein Gleiskörper 2 angeordnet ist. An einem Längsrand 3 des Betonbauwerks 1 ist ein Randelement 6 vorgesehen, das mit einem Längskörper 5 den Längsrand 3 übergreift, wobei der Längskörper 5 ein ausreichendes Volumen aufweist, um ein Einbauelement 4 aufzunehmen. Das Einbauelement 4 ist vorzugsweise im Längskörper 5 einbetoniert oder durchgeankert, es besteht jedoch auch die Möglichkeit, dieses durch Verkleben zu befestigen. Auf dem Längskörper 5 befindet sich ein Pfosten 7, der vorzugsweise aus Stahl besteht und mit einer Fußplatte 8 versehen ist, die dazu dient, an dem Einbauelement 4 befestigt zu werden. Auf diese Befestigung wird nachfolgend noch näher eingegangen. An den Pfosten 7 werden die Schutzwände angebracht. Je nach der Querschnittsform des Längskörpers 5 kann es erforderlich sein, das Einbauelement 4 entsprechend anzupassen, so dass es lediglich an der Oberseite mit einem Gewindeabschnitt frei liegt, aber ansonsten vollständig von Beton umgeben ist. Im Beispiel der Fig. 1 weist das Einbauelement 4 abgewinkelte Abschnitte 9 auf.

Die Fig. 2 zeigt ein aus vier Ankern 10, 11, 12, 13 bestehendes Einbauteil 14, wobei jeder Anker 10, 11, 12, 13 einen im Beton zu verankernden Abschnitt 15 beispielsweise aus einem Rippenstahl und einem Gewindeabschnitt 16 umfasst. Die vier Anker 10, 11, 12, 13 sind im Wesentlichen parallel angeordnet und über aus Stahl bestehende Verbindungsstäbe 17, 18 zu einer Baueinheit mit einer definierten räumlichen Konfiguration zusammengefügt, insbesondere zusammengeschweißt. Es ergibt sich aus dem Beispiel der Fig. 2 ein Einbauelement 14, bei dem die vier Anker 10, 11, 12, 13 so im Beton eingegossen werden, dass die Gewindeabschnitte 16 aller Anker um die gleiche Länge über die Oberkante des in Fig. 1 gezeigten Längskörpers 5 hervorstehen, sofern die Oberkante exakt horizontal ausgebildet wird. Eine flächenbündige Montage der Gewindeabschnitte 16 aller Anker 10, 11, 12, 13 bei geneigter Oberkante des Längskörpers 5 ist ebenfalls als Alternative möglich.

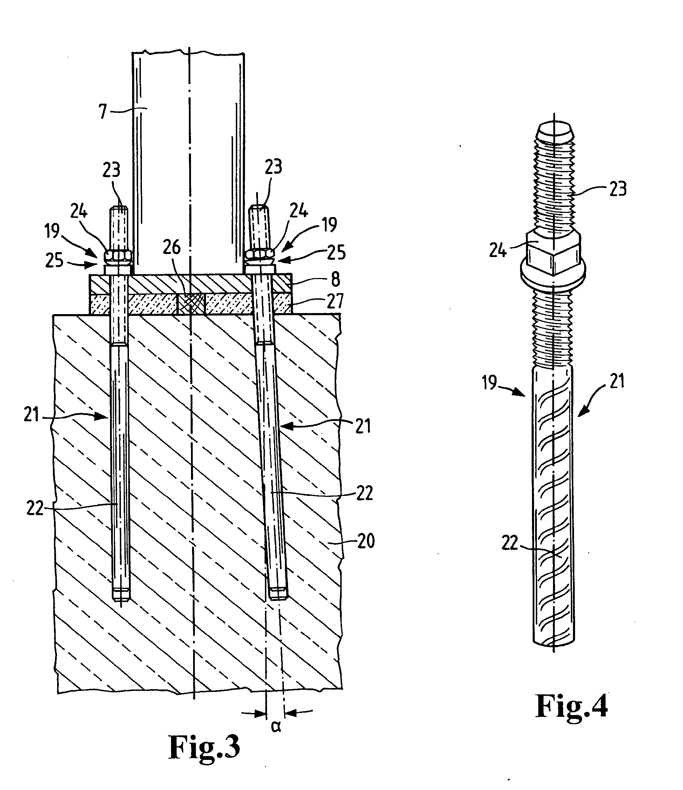

In Fig. 3 ist ein Schnitt durch eine in einem Fundament gehaltene Vorrichtung mit einem daran befestigten Pfosten 7 gezeigt, wobei das Fundament durch einen Betonkörper 20 gebildet ist. Dabei sind mehrere einzelne Einbauelemente 19 im Betonkörper 20 verankert, beispielsweise durch Verklebung befestigt. In der Schnittdarstellung sind lediglich zwei der insgesamt vier Einbauelemente 19 zu sehen. Jedes Einbauelement 19 wird durch einen einzelnen Anker 21 gebildet, der einen längeren Abschnitt 22 zur Verankerung im Betonkörper 20 und einem Gewindeabschnitt 23 umfasst, der aus dem Betonkörper 20 herausragt.

Der Pfosten 7 in Fig. 3 besitzt wie in Fig. 1 eine Fußplatte 8, die mit Bohrungen versehen ist, durch die sich die Gewindeabschnitte 33 der Anker 21 erstrecken. Unter der Fußplatte 8 befindet sich ein Abstandselement 26, beispielsweise ein Elastomerklotz/PVC-Klotz, wobei das Abstandselement 26 mindestens annähernd im Flächenschwerpunkt der Fußplatte 8 angeordnet ist. Um das Abstandselement 26 herum ist der zwischen dem Betonkörper 20 und der Fußplatte 8 gebildete Raum mit einer Schicht 27 aus Mörtel oder Vergussmasse gefüllt.

Auf die Gewindeabschnitte 23 der Anker 21 sind unter Zwischenschaltung von je einer Ausgleichsvorrichtung 25 Muttern 24 aufgeschraubt, mittels derer die Fußplatte 8 gegen den Betonkörper bzw. die Schicht 27 gespannt ist. Die in Fig. 1 nicht näher beschriebene Befestigung der Fußplatte 8 auf dem Längskörper 5 erfolgt ebenso mit Muttern an Gewindeabschnitten 16 der Anker 10, 11, 12, 13 gemäß Fig. 2 unter Zwischenschaltung von Ausgleichsvorrichtungen 25, wie dies in Fig. 3 angegeben ist. Die Ausgleichsvorrichtung 25, die später noch näher erläutert wird, ermöglicht es, innerhalb bestimmter Grenzen durch Schiefstellung bedingte Winkelabweichungen von Längsachsen der Anker auszugleichen, wodurch eine zentrische Lasteinleitung der von der beim Spannen der Mutter 24 auf dem Gewindeabschnitt 23 erzeugten Spannkraft in den Anker 21 erreicht wird. Eine durch handwerkliche Tätigkeit auf der Baustelle bei der Fertigung des Betonbauwerks 1 bzw. Betonkörpers 20 bedingte Winkelabweichung α ist in Fig. 3 dargestellt.

Die Einbauelemente 4 oder 19 bestehen vorzugsweise aus Edelstahl, verzinktem oder unverzinktem Stahl und werden im Beton eingegossen oder verklebt. Dann wird der Pfosten 7 mit seiner Fußplatte 8 aufgesetzt, so dass der Gewindeabschnitt 16, 23 jedes Ankers 10, 11, 12, 13; 21 durch entsprechende Bohrungen der Fußplatte 8 geführt wird. Zur Aufrechterhaltung eines für die Ausrichtung des Pfostens 7 erforderlichen Abstands wird unter der Fußplatte 8 das Abstandselement 26 platziert, und zwar möglichst im Flächenschwerpunkt der Fußplatte 8. Es ist auch möglich, das Abstandselement 26 fest unter der Fußplatte 8 anzubringen, so dass sich das Abstandselement 26 bereits beim Aufstellen des Pfostens 7 in der vorgesehenen Lage des Flächenschwerpunktes befindet, wodurch eine Gefahr des Verrutschens nicht mehr besteht. Der Pfosten 7 kann somit bezüglich seiner Längsachse in jede beliebige Richtung verschwenkt werden, um die geplante Ausrichtung, z. B. exakt vertikal oder senkrecht zur Gradiente, zu erreichen. Die Fixierung vor Verguss der Fußplatte 8 erfolgt durch gezieltes Festdrehen der Muttern 24. Sodann wird um das Abstandselement 26 herum der Freiraum zwischen Fußplatte 8 und dem Betonkörper 20 mit einer Gießmasse oder Mörtel verfüllt, wodurch sich die Schicht 27 ergibt. Nach dem Aushärten der Schicht 27 werden die Muttern 24 weitergeschraubt und gespannt.

Die Fig. 4 zeigt ein als einzelnen Anker 21 ausgeführtes Einbauelement 19, das einen Abschnitt 22 zur Verankerung im Beton und einen Gewindeabschnitt 23 zum Aufschrauben der Mutter 24 umfasst. Der Abschnitt 22 ist zumindest über einen Teil seiner Längserstreckung als Rippenstahl ausgeführt, um einen möglichst guten Formschluss mit dem Beton oder Kleber zu erreichen.

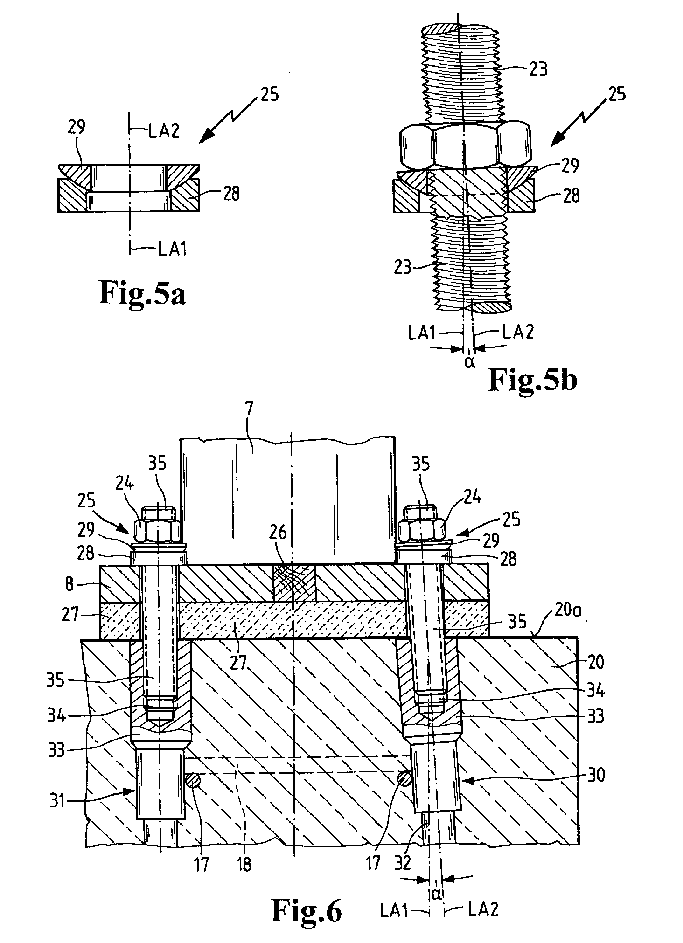

In Fig. 5a und 5b ist die Ausgleichsvorrichtung 25 jeweils im Schnitt dargestellt, wobei die Ausgleichsvorrichtung 25 eine Kegelpfanne 28 und eine darauf gelagerte Kugelscheibe 29 umfasst. Diese Bauteile sind bezüglich ihrer Form und Beschaffenheit in der DIN 6319 festgelegt. Fig. 5a zeigt die Kegelpfanne 28 und Kugelscheibe 29 in einer Position mit exakt ausgerichteten Achsen LA1 und LA2. In Fig. 5b ist durch die Ausgleichsvorrichtung 25 der Gewindeabschnitt 23 geführt, dessen Längsachse LA2 etwas geneigt zur Vertikalachse LA1 verläuft. Auf die mit dem Pfosten 7 in Fig. 1 und 3 ausgerichtete Fußplatte 8 wird die Kegelpfanne 28 aufgelegt, deren Achse LA1 parallel zur Vertikalachse des Pfostens verläuft. Um die Neigung des Gewindeabschnitts 23 auszugleichen, ist die Kugelscheibe 29 auf der Kegelpfanne 28 verschwenkt, so dass die Längsachse LA2 der Kugelscheibe identisch mit der Längsachse LA2 des Gewindeabschnitts 23 des Ankers ist. Durch die verschwenkte Kugelscheibe 29 wird eine parallel zur Spannfläche der Mutter verlaufende Krafteinleitungsfläche bereitgestellt, so dass die Lastaufnahme genau in Längsrichtung der Anker des Einbauelementes gewährleistet ist. Der Winkel zwischen den Längsachsen LA1 und LA2 ist in Fig. 5b mit α bezeichnet.

Die Fig. 6 zeigt eine Ausführungsvariante einer im Betonkörper 20 gehaltenen Vorrichtung zur Aufnahme der Schutzwand in vergrößerter Darstellung. Im Betonkörper ist ein Einbauelement 30 eingegossen, das aus vier Ankern besteht, wobei zwei Anker 31, 32 und Verbindungsstäbe 17, 18 gezeigt sind. Die Verbindungsstäbe 17, 18 bestehen wie diejenigen der Fig. 2 aus Stahl und dienen der gemeinsamen Positionierung der Anker 31, 32 beim Giessen des Betonkörpers 20.

An ihrem der Oberkante des Betonkörpers 20 benachbartem Bereich sind die Anker 31, 32 mit einem Hülsenabschnitt 33 versehen, in dem jeweils eine Gewindebohrung 34 angeordnet ist. In die Gewindebohrungen 34 sind Gewindebolzen 35 geschraubt, die um eine entsprechende Länge über der Oberkante 20a des Betonkörpers 20 hervorstehen. Die Gewindebolzen 35 bilden somit die Gewindeabschnitte zum Aufschrauben der Muttern 24. Die Gewindebolzen 35 sind durch Bohrungen in der Fußplatte 8 des Pfostens 7 geführt, und unter der Fußplatte befinden sich das Abstandselement 26 und die Schicht 27 ebenso wie zur Fig. 3 beschrieben.

Es ist ersichtlich, dass der Anker 32 bezüglich seiner Längsachse LA2 geneigt zur Vertikalen verläuft. Um eine exzentrische Lasteinleitung in den Gewindebolzen 35 zu vermeiden, ist die Ausgleichsvorrichtung 25 vorgesehen, die es ermöglicht, durch Verschwenken der Kugelscheibe 29 gegenüber der Kegelpfanne 28 den Winkel zwischen den Achsen LA1 und LA2 zu kompensieren. Mit den Muttern 24 ist die Fußplatte gegen die Schicht 27 bzw. den Betonkörper 20 gespannt.

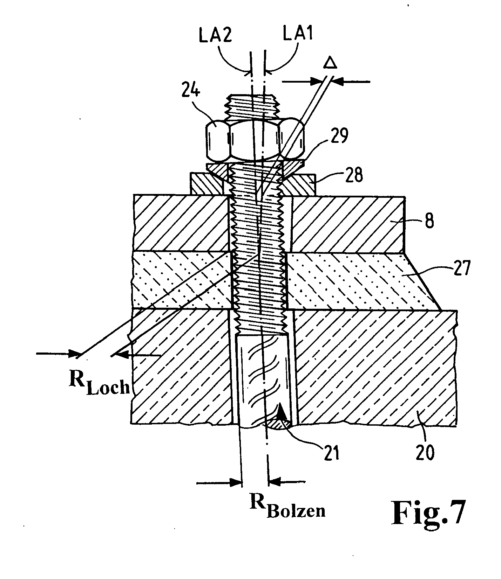

In Fig. 7 ist ein Längsschnitt durch den oberen Teil eines Bolzens 21 gezeigt, der aus dem Betonkörper 20 hervorsteht und sich durch die Schicht 27 sowie die Fußplatte 8 erstreckt. Zur Befestigung sind, wie zu Fig. 5b beschrieben, eine Mutter 24, eine Kegelpfanne 28 und eine Kugelscheibe 29 vorgesehen. Es ist ersichtlich, dass die Längsachse LA2 des Ankers 21 geneigt zur Sollachse LA1 ist. Die Sollachse LA1 ist die Mittelachse eines Loches 36 in der Fußplatte 8. Durch den geneigten Verlauf der Längsachse LA2 des Ankers 21 ist auf der Oberkante der Fußplatte 8 eine Abweichung Δ der beiden Achsen LA1 und LA2 gegeben. Ein Lochradius R_{Loch} des Loches 36 sollte mindestens um die Hälfte der zu erwartenden Abweichung Δ der Längsachse LA2 des Ankers 21 von der Sollachse LA1 an besagter Oberkante der Fußplatte 8 größer sein als ein Bolzenradius R_{Bolzen}. Diese Ausführung entspricht der Abhängigkeit nach der Formel R_{Loch} > = R_{Bolzen} + Δ/2.

## Patentansprüche

1. Anordnung zur Befestigung von Pfosten (7) für Schutzwände auf Bauwerken (1) oder Fundamenten, wobei am Bauwerk (1) oder im Fundament mindestens ein in einem Körper (5, 20) aufgenommenes Einbauelement (4, 19, 30) vorgesehen ist, an dem eine Fußplatte (8) des Pfostens (7) befestigt ist und das die Last der auf die Schutzwand bzw. Pfosten (7) einwirkenden Kräfte aufnimmt, wobei die Fußplatte (8) mittels auf durch die Fußplatte (8) ragende Gewindeabschnitte (16, 23, 35) schraubbare Muttern (24) gegen den das Einbauelement (4, 19, 30) aufnehmenden Körper (5, 20) gespannt ist,
**dadurch gekennzeichnet, dass** zwischen der Fußplatte (8) und der Mutter (24) eine Ausgleichsvorrichtung (25) vorgesehen ist, die eine Kegelpfanne (28) und eine Kugelscheibe (29) umfasst.

2. Anordnung nach Anspruch 1,
**dadurch gekennzeichnet, dass** in der Fußplatte (8) Löcher (36) vorgesehen sind, deren Lochradius (R_{Loch}) mindestens um die Hälfte einer erwarteten Abweichung (Δ) einer Längsachse (LA2) eines Ankers (21, 23, 31, 35) von einer Sollachse (LA2) auf einer Oberkante der Fußplatte (8) größer ist als der halbe Bolzendurchmesser (R_{Bolzen}).

3. Anordnung nach Anspruch 1 oder 2,
**dadurch gekennzeichnet, dass** das Bauwerk (1) einen Längsrand (3) aufweist, an dem ein vorzugsweise aus Beton bestehendes Randelement (6) vorgesehen ist, in dem das Einbauelement (4) gehalten ist.

4. Anordnung nach Anspruch 3,
**dadurch gekennzeichnet, dass** das Randelement (6) einen den Längsrand (3) übergreifenden Längskörper (5) umfasst, in dem das Einbauelement (4) eingegossen oder verklebt ist.

5. Anordnung nach Anspruch 1,
**dadurch gekennzeichnet, dass** das Fundament ein Betonkörper (20) ist, in dem das Einbauelement (19, 30) eingegossen oder verklebt ist.

6. Anordnung nach einem der Ansprüche 1 bis 5,
**dadurch gekennzeichnet, dass** das Einbauelement (4) vier Anker (10, 11, 12, 13; 31, 32) umfasst, die mittels Verbindungsstäben (17, 18) zu einer Baueinheit zusammengesetzt sind.

7. Anordnung nach einem der Ansprüche 1 bis 5,
**dadurch gekennzeichnet, dass** mehrere Einbauelemente (19), die lediglich jeweils einzelne Anker (21) umfassen, vorgesehen sind.

8. Anordnung nach Anspruch 6 oder 7,
**dadurch gekennzeichnet, dass** die Anker (10, 11, 12, 13; 21) einen Abschnitt (15, 22) aus einem Rippenstahl aufweisen.

9. Anordnung nach einem der Ansprüche 6 bis 8,
**dadurch gekennzeichnet, dass** der Gewindeabschnitt (16, 23) an dem Anker (10, 11, 12, 13; 21) angeformt ist.

10. Anordnung nach einem der Ansprüche 6 bis 8,
**dadurch gekennzeichnet, dass** der Gewindeabschnitt durch einen Gewindebolzen (35) gebildet ist, der in eine Gewindebohrung (34) eines am Anker (31, 32) ausgebildeten Hülsenabschnitts (33) eingesetzt ist.

11. Anordnung nach einem der Ansprüche 5 bis 10,
**dadurch gekennzeichnet, dass** zwischen der Fußplatte (8) und dem Betonkörper (20) ein Abstandselement (26) angeordnet ist, das sich vorzugsweise in einem Flächenschwerpunkt der Fußplatte (8) befindet.

12. Anordnung nach Anspruch 11,
**dadurch gekennzeichnet, dass** der Raum zwischen Fußplatte (8) und Betonkörper (20) mit einer Schicht (27) aus Mörtel oder Vergussmasse gefüllt ist.
